# FASCICULE DE BREVET EUROPEEN

(11) **EP 0 656 279 B1**
(45) Date de publication et mention de la délivrance du brevet: **28.08.1996**
(21) Numéro de dépôt: 94402728.3
(22) Date de dépôt: 29.11.1994
(51) Int. Cl.: B60N 2/28

(54) **Rehausseur de siège de véhicules pour enfants et dispositif d'assise**
Kraftfahrzeugzusatzsitz für Kinder und Sitzvorrichtung
Vehicle booster seat for children and seating arrangement

(30) Priorité: 02.12.1993 FR 9314459
(43) Date de publication de la demande: 07.06.1995
(73) Titulaire: BERTRAND FAURE FRANCE, F-92100 Boulogne (FR)
(72) Inventeur: Lopez, Gaby, F-91070 Bondoufle (FR); Courtois, Bernard, F-91150 Morigny (FR)
(74) Mandataire: Burbaud, Eric

(56) Documents cités:
- EP-A- 0 331 299
- EP-A- 0 537 019
- GB-A- 2 047 527
- GB-A- 2 076 648
- US-A- 5 137 335
- US-A- 5 228 745
- PATENT ABSTRACTS OF JAPAN vol. 12, no. 416 (M-759) 4 Novembre 1988 & JP-A-63 151 552 (TOKYO SEAR KK) 24 Juin 1988

## Description

La présente invention est relative aux dispositifs d'assise de véhicules, et aux rehausseurs de sièges, en particulier aux rehausseurs de sièges pour enfants âgés par exemple de 3 à 8 ans.

Plus particulièrement, l'invention concerne un dispositif d'assise de véhicule, comportant un siège et un rehausseur de siège, le siège présentant une armature rigide solidaire de deux pièces de fixation latérales qui sont adaptées à recevoir chacune un accoudoir amovible.

Habituellement, le réhausseur de siège n'est fixé au siège que lorsque un enfant est assis dessus et qu'il a bouclé sa ceinture de sécurité.

Cette disposition est généralement considérée comme satisfaisante.

Toutefois, on peut remarquer que tant qu'un enfant n'est pas assis sur le rehausseur et n'a pas bouclé sa ceinture de sécurité, le rehausseur risque de glisser, notamment en cas de freinage brusque.

En outre, même lorsque un enfant est assis sur le rehausseur et a bouclé sa ceinture, en cas de choc brutal, il est possible que le rehausseur de siège ait tendance à se déplacer par rapport au siège, ce qui peut éventuellement nuire à la sécurité de l'enfant assis dessus.

La présente invention a notamment pour but d'éviter ces inconvénients.

A cet effet, selon l'invention, un dispositif d'assise de véhicule du type visé ci-dessus est essentiellement caractérisé en ce que le rehausseur de siège se prolonge vers l'arrière par deux bras latéraux dotés de moyens pour se fixer auxdites pièces de fixation latérales.

Dans des modes de réalisation préférés, on a recours en outre à l'une et/ou à l'autre des dispositions suivantes :
- le rehausseur de siège comporte des accoudoirs intégrés,
- le rehausseur de siège comporte deux parties latérales relevées, qui présentent chacune une face intérieure, les faces intérieures desdites parties latérales relevées étant disposées en regard l'une de l'autre et comportant des pièces de fixation similaires aux pièces de fixation latérales appartenant au siège, pour recevoir chacune un accoudoir du siège,
- les pièces de fixation latérales appartenant au siège comportent chacune une plaque rigide percée d'un alésage, les bras latéraux du rehausseur de siège comportant chacun un alésage qui peut être disposé en regard de l'alésage d'une des plaques rigides du siège, des goupilles pouvant être emboîtées dans lesdits alésages en regard pour fixer les bras latéraux du rehausseur de siège aux plaques rigides du siège.

L'invention a aussi pour objet un rehausseur de siège tel que défini ci-dessus, caractérisé en ce qu'il se prolonge vers l'arrière par deux bras latéraux dotés de moyens de fixation adaptés à se fixer sur un siège de véhicule qui comporte une armature rigide solidaire de deux pièces de fixation latérales adaptées à recevoir chacune un accoudoir amovible et aptes à coopérer avec lesdits moyens de fixation pour fixer le rehausseur sur le siège de véhicule.

D'autres caractéristiques et avantages de la présente invention apparaîtront au cours de la description détaillée suivante de trois de ses formes de réalisation, données à titre d'exemples non limitatifs, en regard du dessin joint.

Sur le dessin :
- la figure 1 est une vue en perspective montrant un siège de véhicule et son rehausseur de siège associé,
- la figure 2 est une vue de détail illustrant le mode de fixation du rehausseur de siège sur le siège du véhicule, et
- les figures 3 et 4 sont des vues en perspective illustrant des variantes du dispositif de la figure 1.

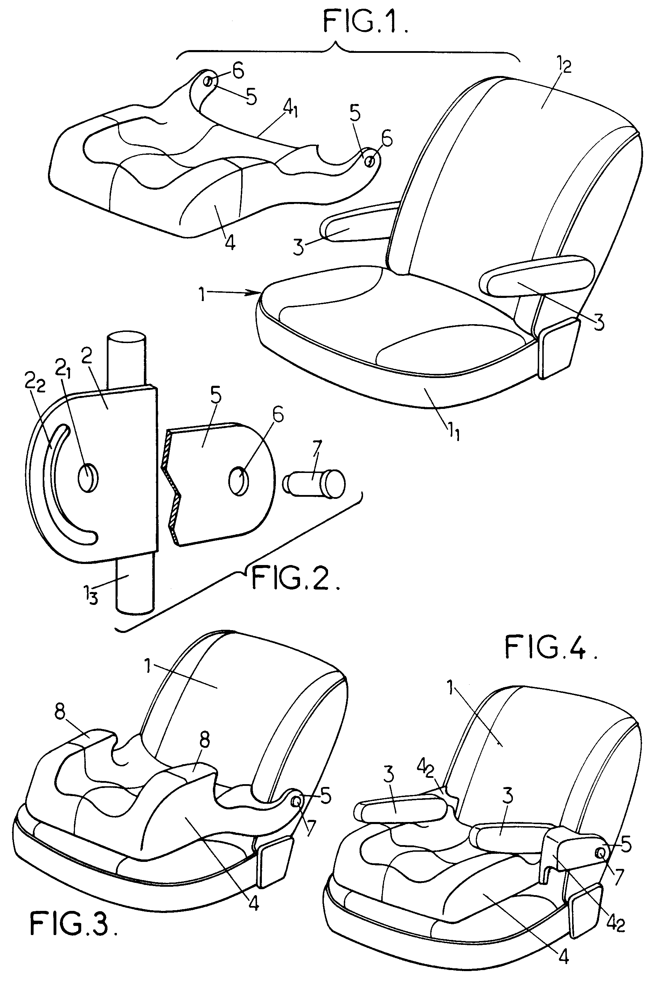

La figure 1 représente un siège de véhicule 1 qui présente une assise 1₁ et un dossier 1₂ comportant deux accoudoirs 3 amovibles, et qui est adapté à recevoir un rehausseur de siège 4. Le siège 1 est plus particulièrement un siège indépendant à une place.

Le rehausseur de siège 4 comporte une partie arrière 4₁, qui se prolonge vers l'arrière par deux bras latéraux 5, chacun percé d'un alésage 6 horizontal.

Comme représenté sur la figure 2, les accoudoirs 3 sont montés rotatifs sur le dossier 1₂ du siège 1 au moyen d'une plaque de fixation 2 rigide, qui est disposée verticalement et qui est solidaire d'une armature 1₃ rigide appartenant au dossier du siège.

Dans l'exemple représenté, chaque plaque de fixation 2 comporte un alésage 2₁ horizontal qui est adapté à recevoir un axe de pivotement (non représenté) de l'accoudoir 3, et une fente de guidage 2₂ en forme de secteur circulaire centré sur l'alésage 2₁ qui est adaptée à recevoir un ergot (non représenté) solidaire de l'accoudoir 3, pour guider et limiter le mouvement de pivotement de l'accoudoir 3.

Pour fixer le rehausseur de siège 4 sur le siège 1, on enlève tout d'abord les deux accoudoirs 3 du siège, par exemple par simple déboîtement.

Ensuite, on dispose le réhausseur de siège 4 sur l'assise 1₁ du siège, en engageant les deux bras latéraux 5 du rehausseur de siège de chaque côté du dossier 1₂ du siège, jusqu'à placer les alésages 6 des deux bras latéraux 5 en coïncidence avec les alésages 2₁ des plaques de fixation 2 disposées de chaque côté du dossier du siège.

Enfin, on engage une goupille 7 dans les alésages 6 et 2₁ en regard, de chaque côté du dossier du siège, par simple emboîtement.

Afin d'éviter que la goupille 7 ne se dégage accidentellement, on peut prévoir éventuellement que son emboîtement dans les alésages 6 et 2₁ comporte un encliquetage en fin de course.

Selon une première variante, représentée sur la figure 3, il est possible de prévoir sur le rehausseur de siège 4 des accoudoirs intégrés 8.

Selon une autre variante, représentée sur la figure 4, le rehausseur de siège 4 peut comporter dans sa partie arrière 4₁, deux parties latérales relevées 4₂ qui présentent chacune une face intérieure, les deux faces intérieures des parties relevées 4₂ étant disposées en regard l'une de l'autre.

Dans cette variante, les faces intérieures de ces parties relevées 4₂ présentent chacune une plaque rigide de fixation identique ou similaire à la plaque 2 disposée de chaque côté du dossier du siège, de sorte qu'on peut fixer sur chacune desdites faces intérieures un des accoudoirs 3 du siège. Du fait que les plaques de fixation appartenant au rehausseur sont identiques ou similaires aux plaques 2 du siège, la fixation des accoudoirs sur le rehausseur se fait de la même façon que sur le siège, par exemple par simple emboîtement.

Ainsi, les accoudoirs du siège servent également d'accoudoirs pour le rehausseur de siège, et ils présentent l'avantage d'être relevables, ce qui peut faciliter l'accès de l'enfant au réhausseur et le passage de la ceinture.

## Revendications

1. Rehausseur (4) pour siège de véhicule, caractérisé en ce qu'il se prolonge vers l'arrière par deux bras latéraux (5) dotés de moyens de fixation (6,7) adaptés à se fixer sur un siège de véhicule (1) qui comporte une armature rigide (1₁) solidaire de deux pièces de fixation (2) latérales adaptées à recevoir chacune un accoudoir (3) amovible et aptes à coopérer avec lesdits moyens de fixation (6,7) pour fixer le rehausseur sur le siège de véhicule.

2. Dispositif d'assise de véhicule, comportant un siège (1) et un rehausseur de siège (4), le siège (1) présentant une armature rigide (1₃) solidaire de deux pièces de fixation (2) latérales qui sont adaptées à recevoir chacune un accoudoir (3) amovible, caractérisé en ce que le rehausseur de siège (4) se prolonge vers l'arrière par deux bras latéraux (5) dotés de moyens (6,7) pour se fixer auxdites pièces de fixation (2) latérales.

3. Dispositif d'assise selon la revendication 2, dans lequel le rehausseur de siège (4) comporte des accoudoirs (8) intégrés.

4. Dispositif d'assise selon la revendication 2, dans lequel le rehausseur de siège comporte deux parties latérales (4₂) relevées, qui présentent chacune une face intérieure, les faces intérieures desdites parties latérales relevées (4₂) étant disposées en regard l'une de l'autre et comportant des pièces de fixation (2) similaires aux pièces de fixation latérales appartenant au siège, pour recevoir chacune un accoudoir (3) du siège.

5. Dispositif d'assise selon l'une quelconque des revendications 2 à 4 dans lequel les pièces de fixation (2) latérales appartenant au siège comportent chacune une plaque rigide percée d'un alésage (2₁), les bras latéraux (5) du rehausseur de siège comportant chacun un alésage (6) qui peut être disposé en regard de l'alésage (2₁) d'une des plaques rigides (2) du siège, des goupilles (7) pouvant être emboîtées dans lesdits alésages en regard pour fixer les bras latéraux du rehausseur de siège aux plaques rigides du siège.

## Claims

1. Vehicle squab raiser (4), characterized in that it is extended towards the rear by two lateral arms (5) provided with fixing means (6, 7) adapted to be fixed onto a vehicle squab (1) which has a rigid frame (1₁) joined to two lateral fixing parts (2) adapted to each receive a removable armrest (3) and able to cooperate with the said fixing means (6, 7) to fix the raiser onto the vehicle squab.

2. Vehicle seat device, having a squab (1) and a squab raiser (4), the squab (1) having a rigid frame (1₃) joined to two lateral fixing parts (2) which are adapted to each receive a removable armrest (3), characterized in that the squab raiser (4) is extended towards the back by two lateral arms (5) provided with means (6, 7) for being fixed to the said lateral fixing parts (2).

3. Seat device according to Claim 2 in which the squab raiser (4) has two integral armrests (8).

4. Seat device according to Claim 2 in which the squab raiser has two raised lateral parts (4₂), which each have an internal face, the internal faces of the said raised lateral parts (4₂) being disposed facing each other and including fixing parts (2) similar to the lateral fixing parts belonging to the squab, so as to each receive one armrest (3) of the squab.

5. Seat device according to any one of Claims 2 to 4, in which the lateral fixing parts (2) belonging to the squab each have a rigid plate with a hole (2₁), the lateral arms (5) of the squab raiser each having a hole (6) which can be disposed facing the hole (2₁) in one of the rigid plates (2) of the squab, pins being able to be fitted into the said facing holes to fix the lateral arms of the squab raiser to the rigid plates of the squab.

## Patentansprüche

1. Sitzerhöhung (4) für einen Autositz, dadurch gekennzeichnet, daß sie nach hinten durch zwei seitliche Arme (5) verlängert ist, die mit Vorrichtungen (6, 7) versehen sind, mit denen sie an einem Autositz (1) befestigt werden können, der einen starren Rahmen (1₁) umfaßt, der fest mit zwei seitlichen Befestigungselementen (2) verbunden ist, die geeignet sind, jeweils eine abnehmbare Armlehne (3) aufzunehmen und mit den Befestigungselementen (6, 7) zusammenzuwirken, um die Sitzerhöhung auf dem Fahrzeugsitz zu befestigen.

2. Kraftfahrzeugsitzvorrichtung, die einen Sitz (1) und eine Sitzerhöhung (4) umfaßt, wobei der Sitz (1) einen starren Rahmen (1₃) aufweist, der fest mit zwei seitlichen Befestigungselementen (2) verbunden ist, die geeignet sind, jeweils eine abnehmbare Armlehne (3) aufzunehmen,
dadurch gekennzeichnet, daß die Sitzerhöhung (4) nach hinten durch zwei seitliche Arme (5) verlängert ist, die mit Vorrichtungen (6, 7) versehen sind, mit denen sie an den seitlichen Befestigungselementen (2) befestigt werden können.

3. Sitzvorrichtung nach Anspruch 2, bei welcher die Sitzerhöhung (4) integrierte Armlehnen (8) umfaßt.

4. Sitzvorrichtung nach Anspruch 2, bei welcher die Sitzerhöhung zwei erhöhte Seitenteile (4₂) umfaßt, die jeweils eine Innenseite haben, wobei die Innenseiten dieser erhöhten Seitenteile (4₂) einander gegenüberliegen und Befestigungselemente (2) aufweisen, die denen vergleichbar sind, die zu dem Sitz gehören, um jeweils eine Armlehne (3) des Sitzes aufzunehmen.

5. Sitzvorrichtung nach einem der Ansprüche 2 bis 4, bei der die zu dem Sitz gehörenden seitlichen Befestigungselemente (2) jeweils eine starre Platte mit einer Bohrung (2₁) aufweisen, wobei die Seitenarme (5) der Sitzerhöhung jeweils eine Bohrung (6) aufweisen, die der Bohrung (2₁) einer der starren Platten (2) des Sitzes gegenüber angeordnet werden kann, wobei Stifte (7) zum Befestigen der Seitenarme der Sitzerhöhung an den starren Platten des Sitzes in diese einander gegenüberliegenden Bohrungen gesteckt werden können.
